# EUROPÄISCHE PATENTSCHRIFT

(11) **EP 1 882 617 B1**
(45) Veröffentlichungstag und Bekanntmachung des Hinweises auf die Patenterteilung: **30.09.2009**
(21) Anmeldenummer: 07113217.9
(22) Anmeldetag: 26.07.2007
(51) Int. Cl.: B60R 21/34

(54) **Vorrichtung zum Aufstellen der Fronthaube eines Kraftfahrzeuges bei einem drohenden Personenaufprall**
Device for active opening of the bonnet of a motor vehicle in the case of imminent collision
Dispositif destiné à mettre le capot avant d'un véhicule automobile en cas de choc de personne menaçant

(30) Priorität: 27.07.2006 DE 102006034726
(43) Veröffentlichungstag der Anmeldung: 30.01.2008
(73) Patentinhaber: ISE Automotive GmbH, 51702 Bergneustadt (DE)
(72) Erfinder: Rex, Martin, 51570 Windeck (DE); Hartebrodt, Raphael, 57489 Drolshagen (DE)
(74) Vertreter: Fuchs

(56) Entgegenhaltungen:
- WO-A-20/05051730
- DE-A1- 10 111 146
- DE-A1- 10 204 594
- DE-A1- 10 209 664
- DE-A1- 10 314 968

## Beschreibung

Die Erfindung bezieht sich auf eine Vorrichtung zum Schutz von Personen bei einem Frontalaufprall auf ein Kraftfahrzeug durch aktives Aufstellen dessen im Windschutzscheibenbereich durch Scharniere angeschlagene und durch ein frontseitiges Schloss, das einen haubenseitigen Schlossbügel und ein karosserieseitiges Schlossgehäuse aufweist, verriegelbare Fronthaube, bestehend aus einem Aufstellelement mit einem karosseriefesten Gehäuse und einem darin linear geführten, mit dem jeweiligen Scharnier verbundenen Hubelement, das sensorgesteuert mittels eines Energiespeichers um einen vorgegebenen Hub unter Aufstellung der Fronthaube ausfahrbar ist.

Jährlich ereignen sich zahlreiche Unfälle, bei denen Fußgänger, seien es Kinder oder Erwachsene, bzw. Zweiradfahrer oder Skater, von einem Kraftfahrzeug angefahren, auf die Front- oder Motorhaube sowie gegen die Windschutzscheibe geschleudert werden, und dabei zumindest schwere Verletzungen erfahren. Dabei ist insbesondere der Kopf sowie der Oberkörper eines erwachsenen Fußgängers bzw. Zweiradfahrers gefährdet, da dieser bei einem Zusammenprall mit einem Kraftfahrzeug - wie Crash-Versuche und auch die Erfahrungen gezeigt haben -, etwa im hinteren, relativ hartem Bereich an der Fronthaube am Übergang zur Windschutzscheibe aufschlägt und dabei erheblich verletzt wird.

Aufgrund von entsprechenden Forderungen arbeitet die Fahrzeugindustrie an dem Problem, den Personenschutz insoweit zu verbessern.

Es ist eine Reihe von Möglichkeiten zur Lösung dieses Problems bekannt geworden. Ein Lösungsprinzip besteht darin, den vorgenannten harten Übergangsbereich zur Windschutzscheibe zu entschärfen, d. h. nachgiebiger zu gestalten, z.B. durch einen sensorgesteuert aufblasbaren Luftsack oder gemäß DE 28 14 107 A in Verbindung mit der DE 28 41 315 durch eine mittels eines Aufprall-Sensors betätigte Vorrichtung zur Verstellung der Fronthaube aus einer Ruheposition in eine demgegenüber angehobene, nachgiebige Aufprallposition, d. h. durch eine sogenannte "aktive Fronthaube". Dadurch, dass die Fronthaube bei der von dem Aufprall-Sensor erfassten Kollision mit einem Fußgänger in eine gegenüber ihrer Ruhe - d. h. Normalfallstellung angehobene Aufprallstellung nachgiebig verstellt wird, wird ein beim Brust- oder Kopfaufprall des Fußgängers im Sinne eines günstigeren Energieabbaues zur Wirkung kommender Deformationsweg der Fahrzeugkarosserie geschaffen, der für verringerte Kopf- und Brustverzögerungen und damit für geringere Verletzungsrisiken sorgt.

Die DE 197 12 961 A1 zeigt ebenfalls einen Aufprallschutz nach dem Prinzip der aktiven Fronthaube, deren windschutzscheibenseitige Scharnieranordnung über einen schwenkbar oder verschiebbar gelagerten Scharnierträger so an der Karosserie des Vorderwagens befestigt ist, dass im Falle einer Kollision des Fahrzeuges mit einer Person die Fronthaube samt der Scharnieranordnung mittels einer an dem Scharnierträger angreifenden energiespeichernder Einrichtung, z. B. einem Feder-Kraftspeicher, nach oben verschwenkt bzw. verschoben, d. h. angehoben werden kann.

Neben diesen Lösungen zur aktiven Fronthaube mit windschutzscheibenseitiger Anhebung der Fronthaube über den Scharnierdrehanschlag, bei denen das vordere Haubenschloss im geschlossenen Zustand verbleibt, wodurch der Frontbereich der Fronthaube relativ steif und hart ist, was für den direkten ersten Kontakt zwischen dem Fahrzeug und der Unfallperson zu direkten Verletzungen führen kann, insbesondere im unteren Rumpfbereich der Unfallperson (Oberschenkel und Bauchbereich), sind gemäß der DE 197 21 565 A1 und DE 101 08 880 A1 auch Konstruktionen für das sensorgesteuerte Aufstellen der Fronthaube im vorderen, d.h. frontseitigen HaubenSchlossbereich bekannt geworden. Das Aufstellen kann dabei unter Entriegelung des Haubenschlosses als auch typischerweise unter Aufstellen der Fronthaube samt geschlossenem Haubenschloß erfolgen. Im letzten Fall ist es notwendig, eine Komponente für einen Wegausgleich in X-Richtung (Fahrtrichtung) vorzusehen, z.B. in Form einer Wippe gemäß der DE 102 43 497 C1, da sich beim Aufstellen im Scharnierbereich die Fronthaube nach vorne zu verschieben versucht.

Die letztgenannte Schrift offenbart dabei auch den Gedanken, im Falle eines drohenden Unfalles die Fronthaube sowohl im Scharnierbereich als auch im Haubenschlossbereich aufzustellen. Eine andere Möglichkeit ist durch der DE-A-101 11 146 veröffentlicht. Von diesem Grundgedanken geht auch die Erfindung aus.

Zum aktiven Aufstellen der Fronthaube dienen Aufstellelemente, die ein karosseriefest angebrachtes Unterteil und ein darin aufstellbar geführtes Hubelement in Verbindung mit einem Energiespeicher besitzen, der durch einen sensorgesteuerten Aktuator im Fall eines drohenden Unfalles auslösbar ist und dabei das Hubelement mit der Fronthaube um einen vorgegebenen Arbeitshub aufstellt.
Der Stand der Technik und Gegenstände von zahlreichen, noch nicht veröffentlichten älteren Anmeldungen der Patentanmelderin, zeigen eine Reihe von Konstruktionen für diese Aufstellelemente, die typischerweise als Energiespeicher einen Federspeicher in Form einer vorspannbaren Schraubenfeder-Anordnung besitzen.

Um die Fronthaube, wie erwähnt, sowohl im Scharnier- als auch im Haubenbereich aufzustellen, ist es bekannt, sowohl ein Aufstellelement für das jeweilige Scharnier als auch ein zweites Aufstellelement für das Haubenschloß vorzusehen. Dadurch ist nicht nur ein erhöhter Aufwand hinsichtlich der Zahl der Aufstellelemente und der Komponente für einen Wegausgleich in X-Richtung (Fahrtrichtung) beim Anheben der Fronthaube notwendig, sondern es bedarf auch eines weiteren Aufwandes hinsichtlich einer synchronen Auslösung der Aufstellelemente um z.B. Verkantungen zu vermeiden. Dieser Aufwand verursacht Mehrkosten, was der durch die Fahrzeughersteller vorgegebenen Notwendigkeit, Kosten einzusparen, zuwider läuft.

Der Erfindung liegt die Aufgabe zugrunde, bei einer Vorrichtung der eingangs bezeichneten Art die Fronthaube sowohl im Scharnier- als auch im Schloßbereich mit geringem Aufwand aufzustellen.

Die Lösung dieser Aufgabe gelingt bei einer Vorrichtung zum Schutz von Personen bei einem Frontalaufprall auf ein Kraftfahrzeug durch aktives Aufstellen dessen im Windschutzscheibenbereich durch Scharniere angeschlagene und durch ein frontseitiges Schloss, das einen haubenseitigen Schlossbügel und ein karosserieseitiges Schlossgehäuse aufweist, verriegelbare Fronthaube, bestehend aus einem Aufstellelement mit einem karosseriefesten Gehäuse und einem darin linear geführten, mit dem jeweiligen Scharnier verbundenen Hubelement, das sensorgesteuert mittels eines Energiespeichers um einen vorgegebenen Hub unter Aufstellung der Fronthaube ausfahrbar ist, gemäß der Erfindung dadurch, dass das frontseitige Schloss mit seinem Schlossgehäuse im verriegelten Zustand nach oben verschwenkbar an der Karosserie des Vorderwagens angelenkt ist, und dass das jeweilige Hubelement derart mit dem zugehörigen Scharnier verbunden ist, dass beim Anheben der Fronthaube durch das Aufstellelement das Schloss zwangsgesteuert durch eine Überlagerung einer translatorischen vertikalen und einer translatorischen horizontalen Bewegung der gesamten Fronthaube um einen vorgegebenen Hub hochschwenkbar ist.

Durch die erfindungsgemäße Maßnahme ist es möglich, die Fronthaube in ihrer Gesamtheit allein mit den Aufstellelementen im Scharnierbereich unter zwangsgesteuerter Ausnutzung der X-Verschiebung der Fronthaube sensorgesteuert anzuheben.

Ausgestaltungen der Erfindung sind in Unteransprüchen gekennzeichnet sowie ergeben sich aus der nachfolgenden Figurenbeschreibung.

Anhand eines in den Zeichnungen beschriebenen Ausführungsbeispiels wird die Erfindung näher beschrieben.

Es zeigen:
- Fig. 1: in einer schematisierten Seitenansicht eine über Scharniere an der Karosse des Vorderwagens angeschlagene aktive Fronthaube eines Personenkraftfahrzeuges, die in einem vorderen Haubenschloss verriegelt ist, mit einer Gegenüberstellung der Grundstellung im Figurenteil A und der mittels eines Aufstellelementes im Scharnierbereich in ihrer Gesamtheit angehobenen Fronthaube gemäß Figurenteil 1B,
- Fig. 2: in einer vergrößerten Ausschnitt-Darstellung das Scharnier nach Fig. 1 in zwei Zuständen, der Grundstellung gemäß Figurenteil 2 A und der angehobenen Stellung im Figurenteil 2 B, sowie in einer rückseitigen isometrischen Darstellung (Fig. 2 C),
- Fig. 3: in einer vergrößerten Ausschnitt-Darstellung das Haubenschloss nach Fig. 1 in zwei Zuständen, der Grundstellung gemäß Figurenteil 3 A und der hochgeschwenkten Position nach Fig. 3B,
- Fig. 4: in vier Figurenteilen A - D jeweils in einer schematisierten Seitenansicht die Zwischen-Positionen der Fronthaube mit Scharnier und Schloss bei ihrer Anhebung vom Ruhezustand nach Fig. 1A in die angehobene Position nach Fig. 1B.

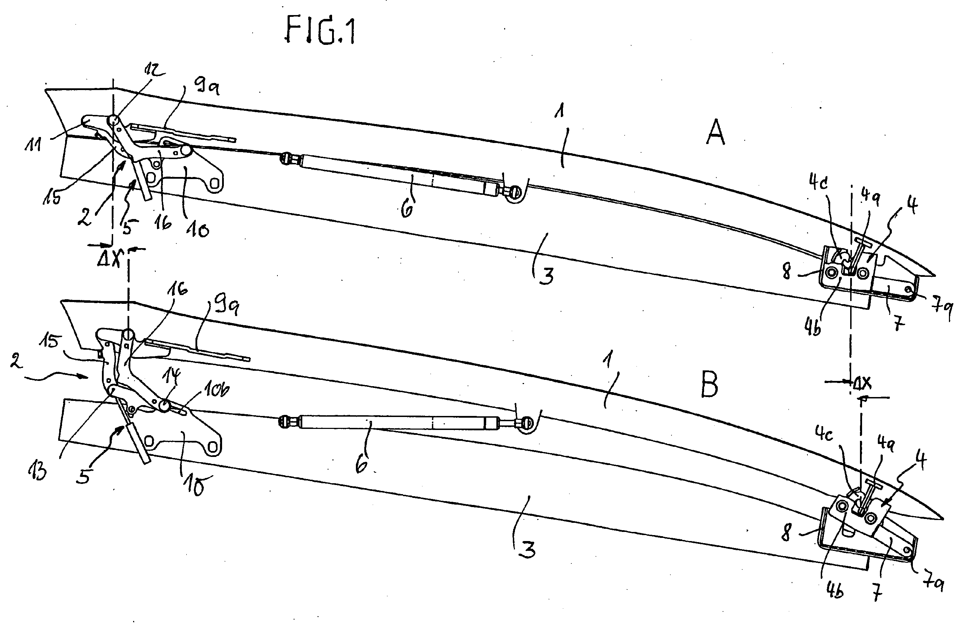

Die Fig. 1 zeigt in einer schematisierten Seitenansicht eine aktive Fronthaube 1 eines Kraftfahrzeuges, die windschutzscheibenseitig beidseitig über eine Scharnieranordnung 2 an der Karosse 3 des Vorderwagens angeschlagen sowie frontseitig typischerweise in einem Haubenschloss 4 verriegelt ist. Im Scharnierbereich ist dabei ein sensorgesteuertes Aufstellelement 5 (Aktor) zum Anheben der Fronthaube bei einem drohenden Unfall vorgesehen. An der Fronthaube 1 ist typischerweise als Öffnungshilfe eine Gasfeder 6 drehbar mit einem Ende angelenkt, die mit ihrem anderen Ende an der Karosse 3 drehbar angelenkt ist. Sie wirkt auch unterstützend bei der Anhebung mit, wie der Kolben-Ausziehhub in Fig. 1B zeigt, weil bei der Anhebbewegung der Fronthaube der Kolben der Gasfeder die Haube mit nach vorne schiebt.

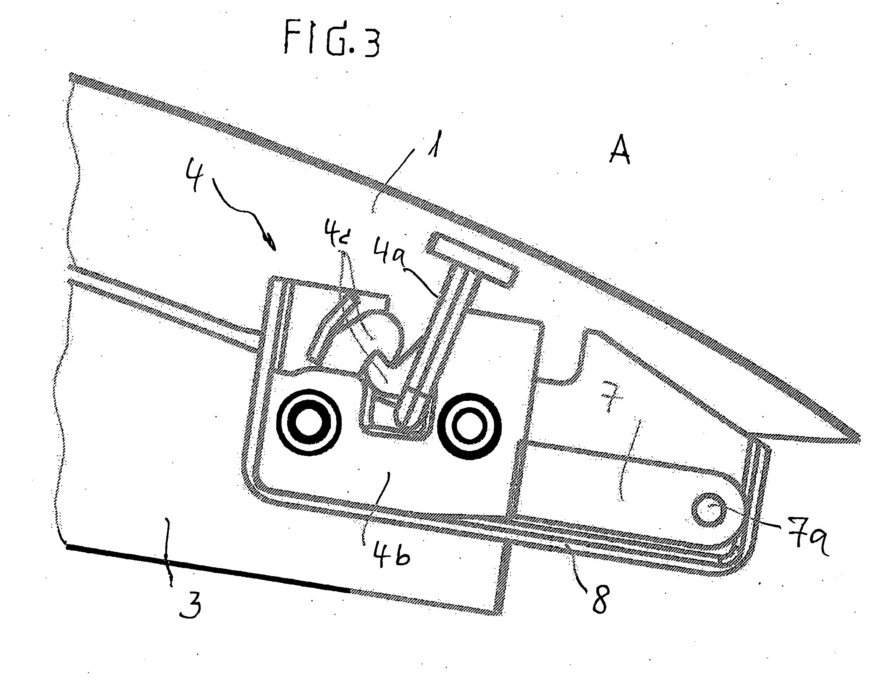

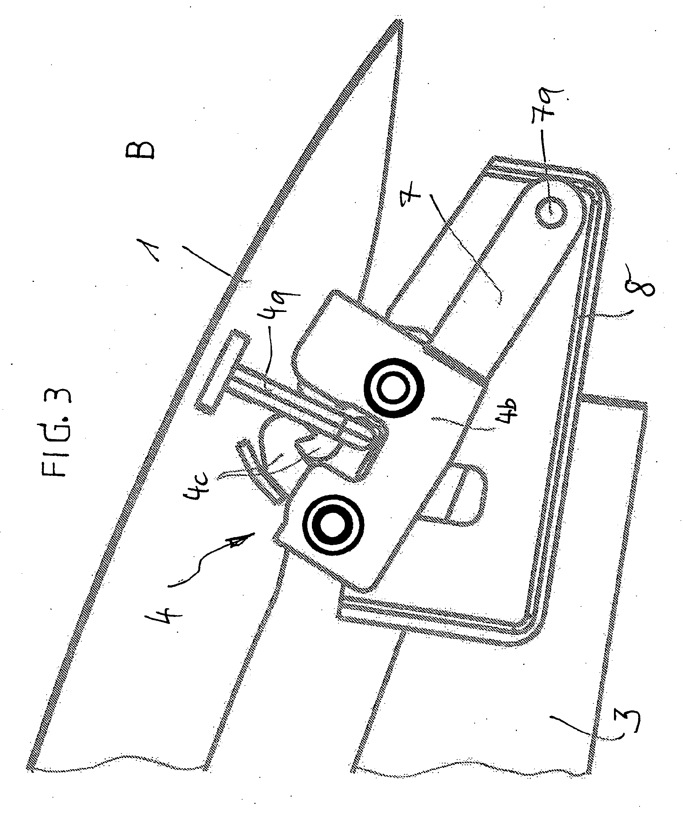

Die Fig. 1 zeigt dabei in einer direkten Gegenüberstellung im Figurenteil A die Fronthaube 1 in der Ruhestellung des Normalbetriebes und im Figurenteil B die angehobene Position der Fronthaube 1. Man erkennt deutlich die Verschiebung "ΔX" der Fronthaube in Fahrtrichtung X bei ihrer Anhebung. Diese Bewegung der Fronthaube in X-Richtung bei ihrer Anhebung wird nicht, wie im bekannten Fall, mit einem zusätzlichen Bauteil kompensiert, sondern erfindungsgemäß zum Aufstellen des Haubenschlosses 4 ohne gesondertes Aufstellelement zwangsgesteuert kräftemäßig umgesetzt. Dies gelingt einmal durch eine besondere Anbringung des Haubenschlosses 4 an der Karosserie 3, welche in Fig. 3 in zwei Figurenteilen A, B vergrößert dargestellt ist. Das Haubenschloss 4 besteht im dargestellten Beispiel in konventioneller Weise aus einem Schlossbügel 4 a, welcher an der Fronthaube 1 befestigt ist, und einem karosserieseitigen Schlossgehäuse 4 b, in welchem Schlossklinken 4 c - auch Drehfallen genannt - drehbeweglich angelenkt sind. Diese Schlossklinken 4 c dienen der üblichen Verriegelung der Fronthaube, die entriegelt (und entsichert) werden muss, um die Fronthaube manuell zu öffnen und aufstellen zu können, insbesondere in die sogenannte Servicestellung. Das Haubenschloss ist mittels einer Lasche 7 um einen Drehpunkt 7 a verschwenkbar in einem karosseriefesten, muldenartigen Gehäuse 8 gelagert.
In der Grundstellung (Figurenteil 3 A) ist das Schlossgehäuse 4 b vollständig in dem muldenartigen, karosseriefesten Gehäuse 8 aufgenommen. Die Drehachse 7 a des Schlossgehäuses 4 b und des von den Drehfallen bzw. Schlossklinken 4 c umschlungenen Schlossbügels sind so beabstandet voneinander angeordnet, dass bei einer Verschiebung der Fronthaube nach vorne in X-Richtung bei ihrer sensorgesteuerten Anhebung über die angelenkte Lasche 7 eine zwangsförmige Rotationsbewegung des Schlossgehäuses nach oben und nach vorne stattfindet. Der angehobene Endzustand ist dabei im Figurenteil 3 B dargestellt. Das Schloss bleibt bei dieser Anhebung verriegelt.

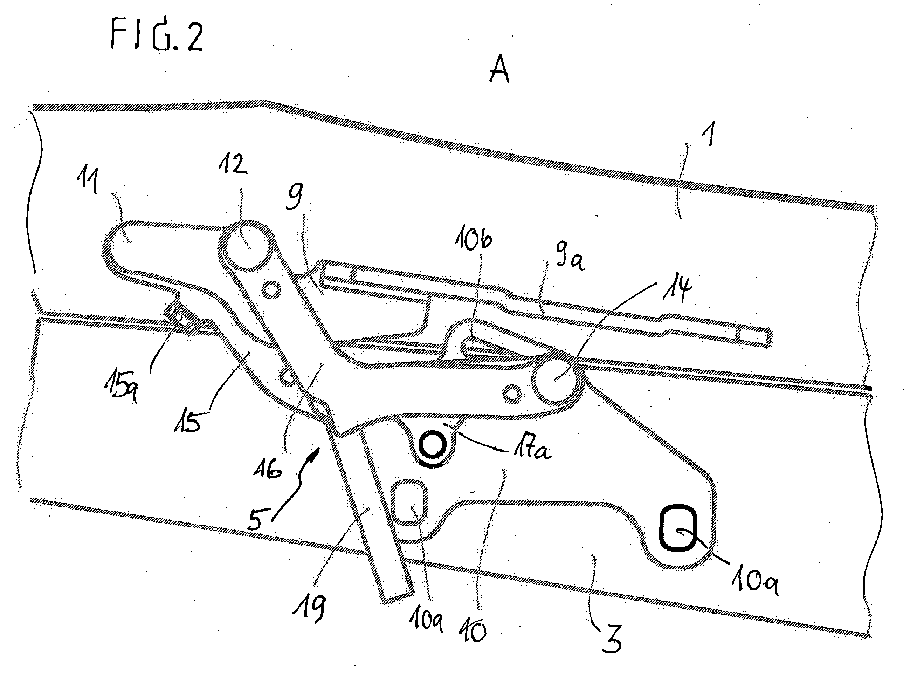

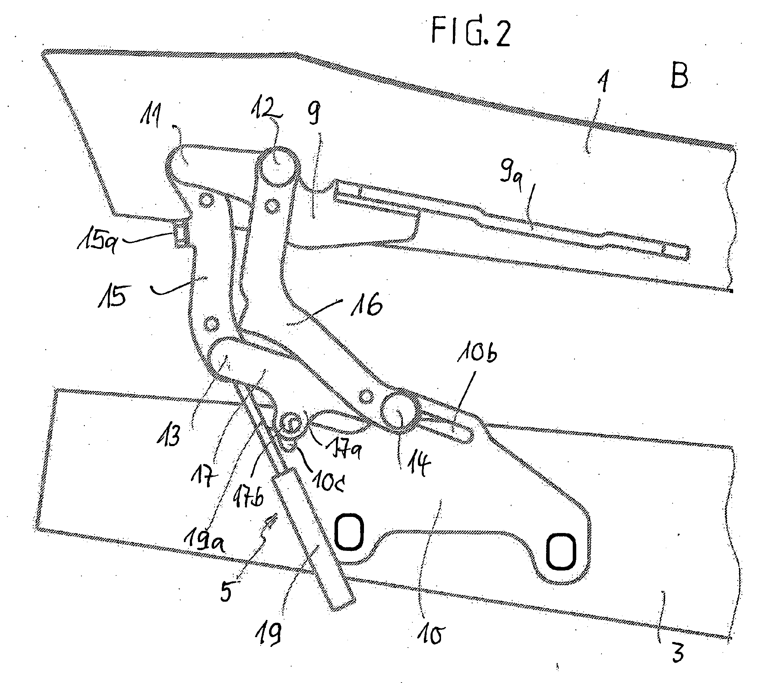

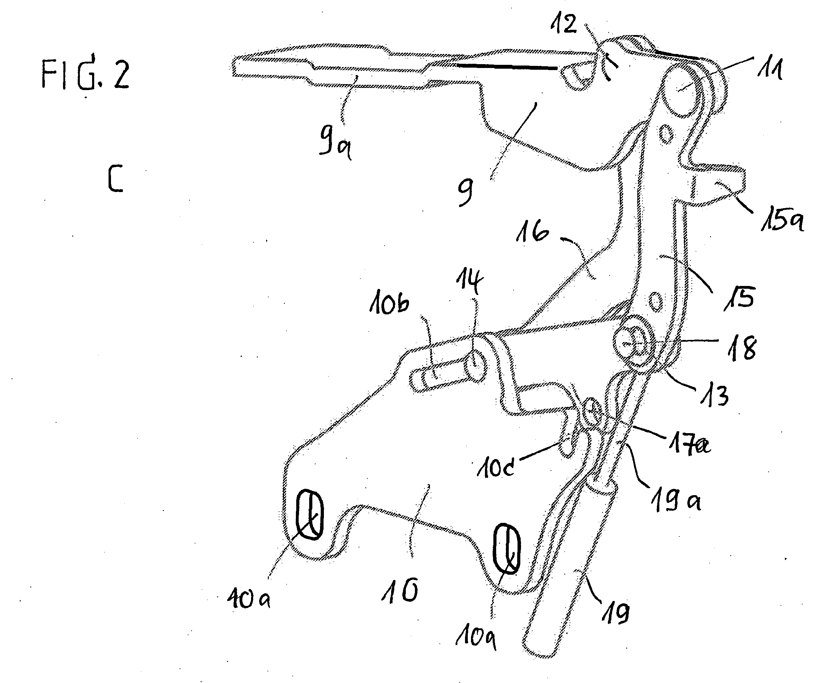

Zum anderen gelingt die kräftemäßig zwangsgesteuerte Umsetzung der hinteren Anhebung durch eine besondere Maßnahme im Scharnierbereich. Eine entsprechende beispielhafte Konstruktion des Scharnierbereiches zeigt die Fig. 2.

In dieser Figur ist ein 4-Gelenk-Scharnier 2 dargestellt, mit einem oberen Scharnierflügel oder Scharnierbeschlag 9 mit vorne angebrachter Haubenplatte 9 a, an welcher die Fronthaube 1 befestigt ist, und einem unteren Scharnierflügel oder Scharnierbeschlag 10, der über Befestigungsbohrungen 10 a fest an der Karosse 3 des Vorderwagens angeschlagen ist. Das Gelenkscharnier weist vier Drehpunkte 11 - 14 auf, nämlich zwei obere Drehpunkte, einen hinteren, oberen Drehpunkt 11 bzw. vorderen oberen Drehpunkt 12, in denen jeweils eine Gelenkstange 15 bzw. 16 (auch Lenker genannt) drehbeweglich am oberen Scharnierbeschlag 9 angelenkt ist, sowie zwei untere Drehpunkte, einen hinteren unteren Drehpunkt 13 und einen vorderen unteren Drehpunkt 14. Der vordere untere Gelenkpunkt 14, über welchen die Gelenkstange 16 am unteren Scharnierbeschlag 10 angelenkt ist, ist dabei lageveränderlich in einem Langloch 10 b, das im unteren Scharnierbeschlag 10 ausgebildet ist, aufgenommen. Der hintere untere Gelenkpunkt 13 ist dabei in einer Achse, die das untere Ende der Gelenkstange 15 mit einer Zwischen-Gelenkstange 17 verbindet, ausgebildet, wobei die Zwischen-Gelenkstange 17 mit ihrem anderen Ende auf der Achse aufgenommen, mit welcher die Gelenkstange 16 in dem Langloch 10 b am unteren Scharnierbeschlag 10 angelenkt ist.

Im unteren Scharnierbeschlag 10 ist ferner eine vertikale gabelförmige Ausnehmung 10 c ausgebildet, in welcher in der Ruhestellung ein pilzartiger Fortsatz 18 auf der Achse des hinteren, unteren Drehpunktes 13 (Fig. 2 C) längsverschiebbar aufgenommen ist (ist in Fig. 2 A) verdeckt).

An der Gelenkstange 15 ist ferner ein dornartiger Fortsatz 15 a angebracht, welcher als Anschlag für die Gelenkstange 16 bei der konventionellen Aufstellung der Fronthaube in die Servicestellung dient.

Das Aufstellelement 5 zum Anheben der Fronthaube im Scharnierbereich 2 (Fig. 1) besteht im dargestellten Ausführungsbeispiel aus einem karosseriefest angebrachten stiftausstoßenden pyrotechnischen Aktuator 19, der einen Anhebestift 19 a aufweist, welcher mit dem unteren Ende der Gelenkstange 15 im Bereich des Drehpunktes 13 drehbar verbunden ist. In der Grundstellung hält der Aktuator über die gabelförmige Aussparung 10 c und den Zapfen 18 den Drehpunkt 13 fest. Wird der Treibsatz des pyrotechnischen Aktuators gezündet, wird der Anhebestift 19 a ausgestoßen, und hebt das Gelenk über die Gelenkstange 15 aus der Ruhestellung (Fig. 1A und Fig. 2 A) an. Diese neuartige Anbindung des Aufstellelementes 5 ist anders als beim Stand der Technik, wo das komplette Scharnier auf einem Scharnierträger befestigt ist, und dieser samt dem Scharnier angehoben wird.
Die dargestellte Anbindung bewirkt, dass zunächst eine vertikale Anhebung in Z-Richtung und eine zwangsweise Längsverschiebung in X-Richtung stattfindet. Durch diesen Bewegungsablauf, der in den Figurenteilen A, B dargestellt ist, wird das vordere drehbar gelagerte Schloss 4 durch den Schlossbügel 4 a rotatorisch nach oben bewegt.

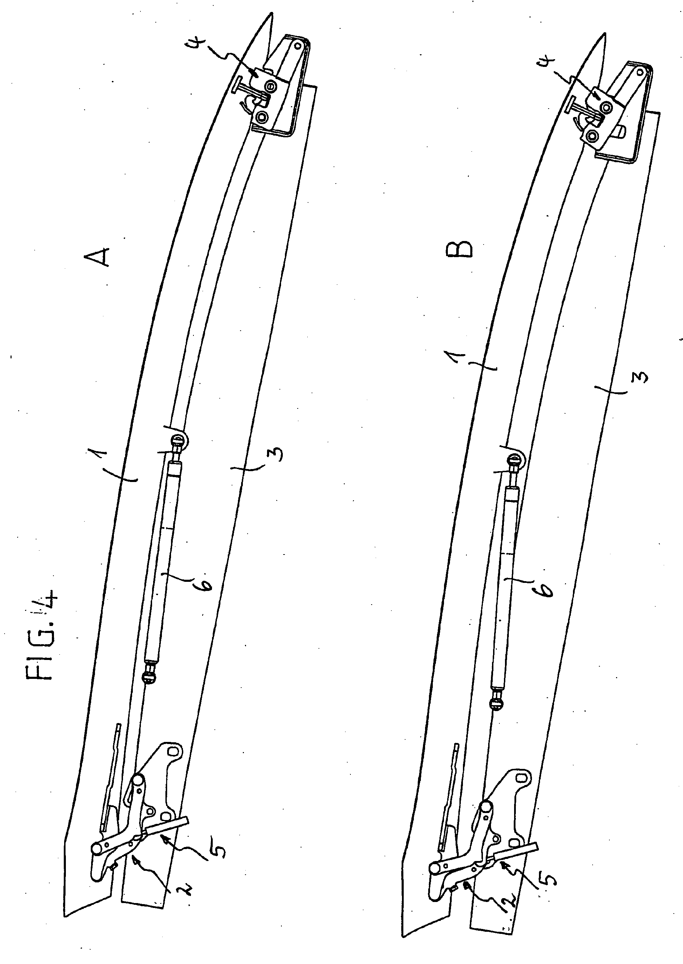

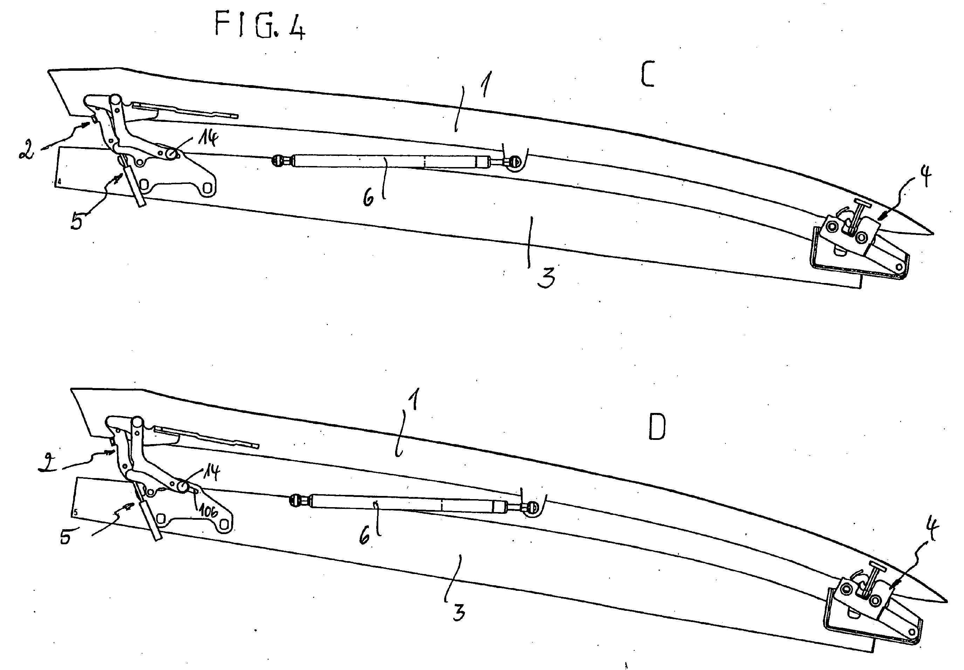

Ist die gewünschte Höhe vorne erreicht und ein weiteres Verschieben in X-Richtung nicht mehr möglich, nutzt der Aktuator den weiteren Hub zum Aufstellen des hinteren Bereiches bis in die Endstellung (Figuren 4 C und B in Verbindung mit Fig. 1 B). Bei dieser Anhebung wird der Drehpunkt 14 in dem Langloch 10 b verschoben. Diese Verschiebung gleicht die "scheinbare" Verschiebung nach vorne aus und die Fronthaube wird nur noch nach oben bewegt.

Sollte der Aktuator am Ende seiner Bewegung sogar "kraftlos" sein, übernimmt die Gasfeder 6 eine Art Stütz- bzw. Haltefunktion in der aufgestellten Lage.

Natürlich kann die Aufstellbewegung auch über 1-Gelenk, andere Mehr-Gelenk-Scharniere sowie Kurvenbahnen und linear geführte Aktoren stattfinden.

Die Bewegungsrichtung für die Zwangssteuerung kann auch nach hinten gerichtet sein. Schloß 4 und Gasfeder 9 müssen dann nur gedreht werden.

### Bezugszeichenliste

- 1: Fronthaube
- 2: Scharnieranordnung
- 3: Karosse
- 4: Haubenschloss
- 4 a: Schlossbügel
- 4 b: Schlossgehäuse
- 4 c: Schlossklinken
- 5: Aufstellelement
- 6: Gasfeder
- 7: Lasche
- 7 a: Drehpunkt (-achse)
- 8: muldenartiges Gehäuse
- 9: oberer Scharnierflügel (-beschlag)
- 9 a: Haubenplatte
- 10: unterer Scharnierflügel
- 10 a: Befestigungsbohrungen
- 10 b: Langloch
- 10 c: gabelförmige Ausnehmung
- 11-14: Gelenk-Drehpunkte
- 15-17: Gelenkstangen
- 15 a: dornartiger Fortsatz
- 17 a: Fortsatz
- 18: pilzförmiger Fortsatz (Zapfen)
- 19: pyrotechnischer Aktuator
- 19 a: Anhebestift

## Patentansprüche

1. Vorrichtung zum Schutz von Personen bei einem Frontalaufprall auf ein Kraftfahrzeug durch aktives Aufstellen dessen im Windschutzscheibenbereich durch Scharniere (2) angeschlagene und durch ein frontseitiges Schloss (4) verriegelbare Fronthaube (1), bestehend aus eine Aufstellelementen im Scharnierbereich (5) mit einem karosseriefesten Gehäuse (19) und einem darin linear geführten, mit dem jeweiligen Scharnier verbundenen Hubelement (19 a), das sensorgesteuert mittels eines Energiespeichers um einen vorgegebenen Hub unter Aufstellung der Fronthaube (1) ausfahrbar ist, **dadurch gekennzeichnet, dass** das frontseitige Schloss (4) im verriegelten Zustand nach oben verschwenkbar an der Karosserie (3) des Vorderwagens angelenkt ist, und dass das jeweilige Hubelement (19 a) derart mit dem zugehörigen Scharnier (2) verbunden ist, dass beim Anheben der Fronthaube (1) durch die Aufstellelemente (5) das Schloss (4) zwangsgesteuert durch eine Überlagerung einer translatorischen vertikalen und einer translatorischen horizontalen Bewegung der gesamten Fronthaube (1) um einen vorgegebenen Hub hochschwenkbar ist".

2. Vorrichtung nach Anspruch 1, **dadurch gekennzeichnet, dass** das frontseitige Schloß (4) aus einem an der Fronthaube (1) fest angebrachten Schließbügel (4 a) und einem karosserieseitigen Schloßgehäuse (4 b) mit Schließklinken (4 c) für den Wirkeingriff mit dem Schließbügel (4 a) besteht.

3. Vorrichtung nach Anspruch 2, **dadurch gekennzeichnet, dass** im Bereich des frontseitigen Schllosses (4) ein muldenartiges Gehäuse (8) karosseriefest ausgebildet ist, in welchem das Schloss (4) mit seinem Schloßgehäuse (4 b) schwenkbar gehaltert ist.

4. Vorrichtung nach Anspruch 3, **dadurch gekennzeichnet, dass** an dem karosserieseitigen Schlossgehäuse (4 b) eine Lasche (7) starr angebracht ist, die im muldenartigen Gehäuse (8) um eine Drehachse (7 a) schwenkbar angelenkt ist.

5. Vorrichtung nach einem der Ansprüche 1 bis 4, **dadurch gekennzeichnet, dass** das Scharnier (2) jeweils durch ein Mehrgelenkscharnier ausgebildet ist.

6. Vorrichtung nach Anspruch 5, **dadurch gekennzeichnet, dass** das Mehrgelenkscharnier durch ein 4-Gelenk-Scharnier gebildet ist, mit einem oberen Scharnierflügel (9), an welchem die Fronthaube (1) fest angebracht ist, und welcher zwei obere Drehpunkte (11, 12) für jeweils eine Gelenkstange (15, 16) aufweist sowie einen unteren Scharnierflügel (10), welcher fest an der Karosserie (3) angeschlagen ist, und dass zwei untere Gelenkpunkte (13, 14) für die Gelenkstangen (15, 16) vorgesehen sind.

7. Vorrichtung nach Anspruch 6, **dadurch gekennzeichnet, dass** die oberen Drehpunkte (11, 12) lageunveränderlich und die unteren Drehpunkte (13, 14) lageveränderlich ausgebildet sind.

8. Vorrichtung nach Anspruch 7, **dadurch gekennzeichnet, dass** der frontseitige untere Drehpunkt (14) in einem Langloch (10 b) des unteren Scharnierflügels (10) linear verschiebbar aufgenommen ist, und der rückseitige untere Drehpunkt (13) über einen Zwischen-Gelenkarm (17) mit dem frontseitigen unteren Drehpunkt (14) verbunden ist.

9. Vorrichtung nach Anspruch 8, **dadurch gekennzeichnet, dass** das Hubelement (19 a) des Aufstellelementes (5) mit dem rückseitigen unteren Drehpunkt (13) verbunden ist.

10. Vorrichtung nach Anspruch 9, **dadurch gekennzeichnet, dass** das Aufstellelement (5) durch einen karosseriefest angebrachten pyrotechnischen Aktuator (19) mit einem ausstoßbaren Anhebestift (19 a) als Hubelement gebildet ist.

11. Vorrichtung nach einem der Ansprüche 8 bis 10, **dadurch gekennzeichnet, dass** im unteren Scharnierflügel (10) eine nach oben offene gabelförmige Ausnehmung (10 c) ausgebildet ist, in welcher in der Ruhelage der Vorrichtung ein pilzförmiger Fortsatz (18) des rückseitigen unteren Drehpunktes (13) längsverschiebbar aufgenommen ist.

12. Vorrichtung nach einem der Ansprüche 1 bis 11, **dadurch gekennzeichnet, dass** an der Fronthaube (1) einerseits und an der Karosse (3) des Vorderwagens andererseits eine Gasfeder (6) als Öffnungshilfe angelenkt ist.

## Claims

1. Device for the protection of people during a head-on collision in a motor vehicle by active opening of its front bonnet (1) attached in the windscreen region by hinges (2) and which can be locked by a front-side lock (4), consisting of an opening element (5) in the hinge region with a housing (19) fixed to the body and a lifting element (19a) guided linearly therein and connected to the particular hinge and which can be moved out in sensor-controlled manner by means of an energy store by a preset stroke with opening of the front bonnet (1), **characterised in that** the front-side lock (4) in the locked state is hinged to the body (3) of the front car to be upwardly pivotable, and **in that** the particular lifting element (19a) is connected to the associated hinge (2) such that during raising of the front bonnet (1) by the opening element (5), the lock (4) can be raised in force-controlled manner by superposition of a translational vertical movement and a translational horizontal movement of the entire front bonnet (1) by a preset stroke.

2. Device according to claim 1, **characterised in that** the front-side lock (4) consists of a closing clip (4a) firmly attached to the front bonnet (1) and a body-side lock housing (4b) with closing catches (4c) for active engagement with the closing clip (4a).

3. Device according to claim 2, **characterised in that** in the region of the front-side lock (4), a trough-like housing (8) is formed to be fixed to the body, in which the lock (4) is mounted to be pivotable with its lock housing (4b).

4. Device according to claim 3, **characterised in that** a cover plate (7), which is hinged pivotably in the trough-like housing (8) about an axis of rotation (7a), is attached rigidly to the body-side lock housing (4b).

5. Device according to one of claims 1 to 4, **characterised in that** the hinge (2) is formed in each case by a multi-joint hinge.

6. Device according to claim 5, **characterised in that** the multi-joint hinge is formed by a 4-joint hinge, with an upper hinge wing (9), to which the front bonnet (1) is firmly attached, and which has two upper pivots (11, 12) for in each case one hinge rod (15, 16) and a lower hinge wing (10), which is attached firmly to the body (3), and **in that** two lower hinge points (13, 14) for the hinge rods (15, 16) are provided.

7. Device according to claim 6, **characterised in that** the upper pivots (11, 12) are designed to be fixed in position and the lower pivots (13, 14) are designed to be changeable in position.

8. Device according to claim 7, **characterised in that** the front-side lower pivot (14) is received in an elongated hole (10b) of the lower hinge wing (10) to be linearly displaceable, and the rear-side lower pivot (13) is connected to the front-side lower pivot (14) via an intermediate hinge arm (17).

9. Device according to claim 8, **characterised in that** the lifting element (19a) of the opening element (5) is connected to the rear-side lower pivot (13).

10. Device according to claim 9, **characterised in that** the opening element (5) is formed by a pyrotechnic actuator (19) attached firmly to the body with an ejectable lifting pin (19a) as lifting element.

11. Device according to one of claims 8 to 10, **characterised in that** a fork-like recess (10c) which is open at the top and in which a mushroom-shaped attachment (18) of the rear-side lower pivot (13) is accommodated to be longitudinally displaceable in the rest position of the device, is formed in the lower hinge wing (10).

12. Device according to one of claims 1 to 11, **characterised in that** a pneumatic spring (6) as an opening aid is hinged to the front bonnet (1) on one side and to the body (3) of the front car on the other side.

## Revendications

1. Dispositif pour la protection de personnes dans le cas d'un choc avant sur un véhicule automobile, par dressage actif de son capot avant (1), monté par des charnières (2) dans la zone de pare-brise et susceptible d'être verrouillé au moyen d'un verrou (4) situé côté avant, composé d'un élément de dressage (5), situé dans la zone de charnière, avec un boîtier (19) fixé à la carrosserie, et d'un élément de manoeuvre (19a), y étant guidé de manière linéaire, relié à la charnière respective, déployable d'une course déterminée, sous la commande d'un capteur, à l'aide d'un accumulateur d'énergie, ceci s'accompagnant du dressage du capot avant (1), **caractérisé en ce que** le verrou (4) situé côté avant, à l'état verrouillé, est articulé, en étant susceptible de pivoter vers le haut, sur la carrosserie de l'avant-train, et **en ce que** l'élément de manoeuvre (19a) respectif est relié à la charnière afférente, de manière que, lors du levage du capot avant (1) au moyen des éléments de dressage (5), le verrou (4) soit susceptible d'être relevé par pivotement, de la valeur d'une course prédéterminée, en étant soumise à une commande forcée, par une superposition d'un déplacement vertical en translation et d'un déplacement horizontal en translation, de l'ensemble du capot avant (1).

2. Dispositif selon la revendication 1, **caractérisé en ce que** le verrou (4) situé côté avant est composé d'un étrier de fermeture (4a), monté rigidement sur le capot avant (1), et d'un boîtier de verrou (4b) situé côté carrosserie, avec des cliquets de fermeture (4c) pour l'engagement fonctionnel avec l'étrier de fermeture (4a).

3. Dispositif selon la revendication 2, **caractérisé en ce que**, dans la zone du verrou (4) situé côté avant, est réalisé, fixée rigidement à la carrosserie, un boîtier (8) du genre d'une auge, dans lequel le verrou (4) avec son boîtier de verrou (4b) est maintenu, en pouvant pivoter.

4. Dispositif selon la revendication 3, **caractérisé en ce que** sur le boîtier du verrou (4b) situé côté carrosserie est montée rigidement une patte (7), articulée de manière à pouvoir pivoter autour d'un axe de rotation (7a), dans le boîtier (8) du genre d'une auge.

5. Dispositif selon l'une des revendications 1 à 4, **caractérisé en ce que** la charnière (2) est réalisée chaque fois par une charnière à plusieurs articulations.

6. Dispositif selon la revendication 5, **caractérisé en ce que** la charnière à plusieurs articulations est formée par une charnière à 4 articulations, avec une ailette de charnière supérieure (9), sur laquelle le capot avant (1) est monté rigidement, et présentant deux centres de rotation supérieurs (11, 12), chacun pour une tige d'articulation (15, 16), ainsi qu'une ailette de charnière inférieure (10), montée rigidement sur la carrosserie (3), et **en ce que** deux points d'articulation inférieurs (13, 14) sont prévus pour les tiges d'articulation (15, 16).

7. Dispositif selon la revendication 6, **caractérisé en ce que** les centres de rotation supérieurs (11, 12) sont en position non modifiable et les centres de rotation inférieurs (11, 12) sont en position modifiable.

8. Dispositif selon la revendication 7, **caractérisé en ce que** le centre de rotation inférieur (14), situé côté avant, est logé, de façon déplaçable linéairement, dans un trou oblong (10b) de l'ailette de charnière inférieure (10), et le centre de rotation inférieure (13) situé côté arrière est relié, par l'intermédiaire d'un bras articulé intermédiaire (17), au centre de rotation inférieur (14), situé côté avant.

9. Dispositif selon la revendication 8, **caractérisé en ce que** l'élément de manoeuvre (19a) de l'élément de dressage (5) est relié au centre de rotation inférieure (13) situé côté arrière.

10. Dispositif selon la revendication 91, **caractérisé en ce que** l'élément de dressage (5) est formé par un actionneur (19) pyrotechnique, monté rigidement sur la carrosserie, avec une tige de levage (19a) expulsable, faisant office d'élément de manoeuvre.

11. Dispositif selon l'une des revendications 8 à 10, **caractérisé en ce que**, dans l'ailette de charnière inférieure (10), est réalisé un évidement (10c) à forme de fourche, ouvert vers le haut, dans lequel, en position de repos du dispositif, un prolongement (18) en forme de champignon du centre de rotation inférieure (13) situé côté arrière est logé de manière déplaçable longitudinalement.

12. Dispositif selon l'une des revendications 1 à 11, **caractérisé en ce qu'**un ressort à gaz (6), faisant office d'aide à l'ouverture, est articulé sur le capot avant (1), d'une part, et sur la carrosserie (3) de l'avant-train, d'autre part.
